# EUROPEAN PATENT APPLICATION

(11) **EP 4 406 650 A1**
(43) Date of publication of application: **31.07.2024**
(21) Application number: 22889688.2
(22) Date of filing: 28.09.2022
(51) Int. Cl.: B01J 37/02, B01D 53/94, B01J 23/63, F01N 3/28

(54) **EXHAUST GAS CLEANING CATALYST PRODUCTION METHOD AND EXHAUST GAS CLEANING CATALYST**

(30) Priority: 04.11.2021 JP 2021180551
(71) Applicant: CATALER CORPORATION, Kakegawa-shi, Shizuoka 437-1492 (JP)
(72) Inventor: OSHIMA, Tatsuhiro, Kakegawa-shi, Shizuoka 437-1492 (JP); OHASHI, Tatsuya, Kakegawa-shi, Shizuoka 437-1492 (JP); TASAKI, Ryo, Kakegawa-shi, Shizuoka 437-1492 (JP)
(74) Representative: Kramer Barske Schmidtchen Patentanwälte PartG mbB
(86) International application number: PCT/JP2022/036137
(87) International publication number: WO 2023/079864

(57) **Abstract**

The present disclosure provides a technology of reducing migration of a noble metal catalyst in high temperature environments and reducing degradation of temperature characteristics. The production method disclosed herein includes: preparing an SiC base material 10 which has partitions 16 partitioning multiple cells and contains SiC; and forming a Pd catalyst layer 20 containing at least Pd particles 22 on surfaces of the partitions 16 of the SiC base material 10. In the production method disclosed herein, in the forming of the catalyst layer, the Pd catalyst layer 20 is formed by causing the Pd particles 22 to be carried directly on an Si member containing Si or SiC (for example, the partitions 16 of the SiC base material 10). Contacting between the Si member (SiC base material 10) and the Pd particles 22 in advance reduces migration and aggregation of the Pd particles 22 in high temperature environment and reduces degradation of temperature characteristics.

## Description

### Technical Field

The present invention relates to an exhaust gas purification catalyst. The present invention specifically relates to a method for producing an exhaust gas purification catalyst including an SiC base material and an exhaust gas purification catalyst obtained by the method.

The present application is based upon and claims the benefit of priority from Japanese patent application No. 2021-180551 filed on November 4, 2021, and the entire disclosure of which is incorporated herein its entirety by reference.

### Background Art

The exhaust gas exhausted from the internal combustion engine contains hazardous components such as carbon monoxide (CO), hydrocarbon (HC), and nitrogen oxide (NOx). Exhaust gas purification catalysts for purifying these hazardous components are placed in exhaust passages of internal combustion engines. A typical exhaust gas purification catalyst includes a base material having a honeycomb structure in which multiple gas flow paths (cells) are partitioned by partition walls, and a catalyst layer provided on the surfaces of the partition walls of the base material. The catalyst layer is made of a catalyst material in which a noble metal catalyst is carried on a metal oxide carrier such as alumina particles.

In the exhaust gas purification catalyst with such a configuration, a base material containing silicon carbide (SiC) (hereinafter referred to as a "SiC base material") may be used. For example, the exhaust gas purification catalyst needs to be used in the state where the temperature thereof is increased to the active temperature of the noble metal catalyst in order to achieve a suitable exhaust gas purification effect. Here, the temperature of the exhaust gas purification catalyst in the commonly used exhaust system is increased by heat from the exhaust gas. Thus, when the temperature of exhaust gas is low, for example, immediately after engine startup, a suitable exhaust gas purification effect may not be exhibited. In contrast, recently, electrically heated catalysts (EHCs: Electrically Heated Catalysts) have been attracting attention (see Patent Literatures 1 to 4). The electrically heated catalyst has electroconductivity and includes an SiC base material functioning as a resistance heating element. The electrically heated catalyst including the SiC base material can easily raise the temperature inside the base material by energizing, thereby exhibiting a suitable purification effect even at low exhaust gas temperature. The SiC base material is also used in a diesel particulate filter (DPF) because it is difficult to be cracked in high-temperature environments.

### Citation List

### Patent Literatures

Patent Literature 1: Japanese Patent No. 6052250
Patent Literature 2: Japanese Patent No. 6364374
Patent Literature 3: Japanese Patent Application Publication No. H11-230132
Patent Literature 4: Japanese Patent Application Publication No. 2004-351292

### Summary of Invention

### Technical Problem

As mentioned above, the SiC base material is widely used in the field of exhaust gas purification catalysts. However, the exhaust gas purification catalyst including the SiC base material has a problem that the noble metal catalyst in the catalyst layer in high temperature environments migrates toward the partitions of the SiC base material. As the migration of the noble metal catalyst progresses, the frequency of contact between the noble metal catalysts increases and aggregation thereof is promoted, which may result in difficulty of exhibiting suitable exhaust gas purification performance (for example, temperature characteristics).

The present invention was made to solve the problem and is intended to provide a technology which can reduce migration of the noble metal catalyst in high temperature environments and reduce degradation of the temperature characteristics.

### Solution to Problem

In order to solve the problem, a method for producing an exhaust gas purification catalyst (hereinafter also merely referred to as the "production method") is provided.

The production method disclosed herein includes: preparing an SiC base material which has partitions partitioning multiple cells and contains SiC; and forming a Pd catalyst layer containing at least Pd on surfaces of the partitions of the SiC base material. In the production method disclosed herein, in the forming of the catalyst layer, the Pd catalyst layer is formed by causing Pd to be carried directly on an Si member containing Si or SiC.

As results of various experiments, it was demonstrated that migration of the noble metal catalyst toward the SiC base material is particularly significant when palladium (Pd) is used as a noble metal catalyst. The inventors considered that the reason for this phenomenon is that Pd is very reactive with single Si and SiC, and is easily led toward the partitions of the SiC base material containing a large amount of these materials. The technology disclosed herein is based on the findings. In other words, in the production method disclosed herein, Pd is carried directly on the Si member containing single Si or SiC. Contacting between the Si member and Pd in advance reduces migration of Pd in high temperature environments and reduce degradation of temperature characteristics due to aggregation of the noble metal catalyst (Pd).

In a preferred aspect of the production method disclosed herein, in the forming of the catalyst layer, a Pd catalyst layer containing substantially no metal oxide carrier is formed. This allows suitable reduction in migration of Pd in high temperature environments.

Examples of the metal oxide carrier include metal oxide particles including at least one selected from the group consisting of aluminum oxide, silicon oxide, magnesium oxide, titanium oxide, cerium oxide, zirconium oxide, calcium oxide, strontium oxide, barium oxide, praseodymium oxide, lanthanum oxide, niobium oxide, and yttrium oxide. Formation of the Pd catalyst layer containing no metal oxide particles allows further suitable reduction in migration of Pd in high temperature environments.

In a preferred aspect of the production method disclosed herein, the forming of the catalyst layer includes: preparing a Pd solution containing Pd; applying the Pd solution to the surfaces of the partitions of the SiC base material; and firing the Pd solution adhered to the surfaces of the partitions. This makes it easy to form a Pd catalyst layer in which Pd is carried directly on the Si member (the partitions of the SiC base material).

In a preferred aspect of the production method disclosed herein, the forming of the catalyst layer includes: preparing a Pd-Si slurry in which Si-containing particles containing Si or SiC is dispersed in the Pd solution containing the Pd; applying the Pd-Si slurry on the surfaces of the partitions of the SiC base material; and firing the Pd solution adhered to the surfaces of the partitions. This makes it easy to form a Pd catalyst layer in which Pd is carried directly on the Si member (Si-containing particles).

Another aspect of the technology disclosed herein provides an exhaust gas purification catalyst. The exhaust gas purification catalyst disclosed herein includes an SiC base material which has partitions partitioning multiple cells and contains SiC; and a Pd catalyst layer provided on the partitions of the SiC base material and containing at least Pd. In the exhaust gas purification catalyst disclosed herein, in the Pd catalyst layer, the Pd is carried directly on an Si member containing Si or SiC. This allows reduction in migration of Pd in high temperature environments and reduction in degradation of temperature characteristics.

In a preferred aspect of the exhaust gas purification catalyst disclosed herein, the Pd catalyst layer contains substantially no metal oxide carrier. This allows suitable reduction in migration of Pd in high temperature environments.

Examples of the metal oxide carrier include metal oxide particles including at least one selected from the group consisting of aluminum oxide, silicon oxide, magnesium oxide, titanium oxide, cerium oxide, zirconium oxide, calcium oxide, strontium oxide, barium oxide, praseodymium oxide, lanthanum oxide, niobium oxide, and yttrium oxide. This allows further suitable reduction in migration of Pd in high temperature environments.

In a preferred aspect of the exhaust gas purification catalyst disclosed herein, the Si member is the partitions of the SiC base material, and the Pd is carried on the partitions of the SiC base material. This allows further suitable reduction in migration of Pd in high temperature environments.

In a preferred aspect of the exhaust gas purification catalyst disclosed herein, the Si member is Si-containing particles containing Si or SiC, and the Pd is carried on the Si-containing particles. This aspect also allows further suitable reduction in migration of Pd in high temperature environments.

### BRIEF DESCRIPTION OF DRAWINGS

[Fig. 1] Fig. 1 is a schematic perspective view of an exhaust gas purification catalyst according to a first embodiment.
[Fig. 2] Fig. 2 is cross-sectional view of an SiC base material of the exhaust gas purification catalyst according to the first embodiment when cut along a cylinder axis direction.
[Fig. 3] Fig. 3 is a schematic sectional view of a layer structure in a partition of the SiC base material shown in Fig. 2.
[Fig. 4] Fig. 4 is a schematic sectional view of a layer structure in a partition of an SiC base material of an exhaust gas purification catalyst according to a second embodiment.
[Fig. 5] Fig. 5 shows results of analysis using FE-EPMA before and after a durability test in Comparative Example 1.
[Fig. 6] Fig. 6 shows results of analysis using FE-EPMA before and after a durability test in Comparative Example 2.
[Fig. 7] Fig. 7 shows results of analysis using FE-EPMA before and after a durability test in Comparative Example 3.
[Fig. 8] Fig. 8 shows results of analysis using FE-EPMA before and after a durability test in Example 1.
[Fig. 9] Fig. 9 is a schematic sectional view of the layer structure in a partition of the SiC base material of a commonly used exhaust gas purification catalyst.
[Fig. 10] Fig. 10 is a schematic sectional view of the state of the exhaust gas purification catalyst shown in Fig. 9 after being exposed to a high temperature environment.

### DESCRIPTION OF EMBODIMENTS

The following describes embodiments of the present disclosure with reference to the drawings. The matters necessary for executing the technology disclosed herein, except for matters specifically herein referred to can be grasped as design matters of those skilled in the art based on the related art in the preset field. The technology disclosed herein can be executed based on the contents disclosed herein and the technical knowledge in the present field. The drawings herein are schematically shown for the purpose of understanding the technology disclosed herein, and the dimensional relation (such as length, width, or thickness) in each drawing does not reflect the actual dimensional relation.

### [First Embodiment]

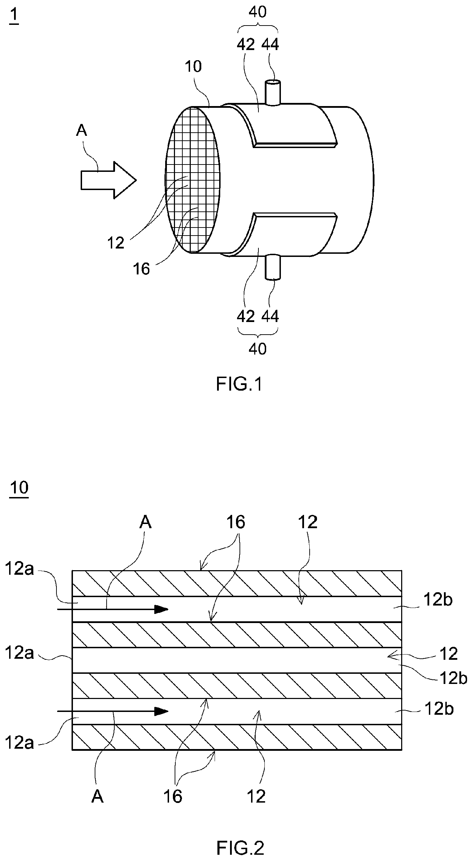

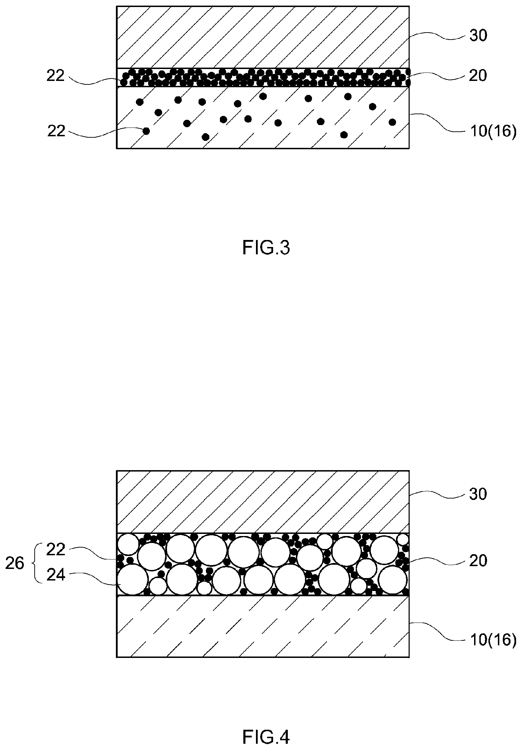

The following describes a first embodiment of the technology disclosed herein. Fig. 1 is a schematic perspective view of an exhaust gas purification catalyst according to the first embodiment. Fig. 2 is a cross-sectional view of an SiC base material of the exhaust gas purification catalyst according to the first embodiment when cut along a cylinder axis direction. Fig. 3 is a schematic sectional view of a layer structure in a partition of an SiC base material shown in Fig. 2. The arrow A in Figs. 1 and 2 represents the direction in which exhaust gas is distributed.

### 1. Exhaust gas purification catalyst

First, the structure of the exhaust gas purification catalyst according to the present embodiment will be described. The exhaust gas purification catalyst 1 according to the present embodiment is placed in exhaust systems (exhaust pipes) of various internal-combustion engines (such as diesel engines and gasoline engines) and purifies hazardous components (such as HC, CO, and NOx) in exhaust gas exhausted from the internal-combustion engines. As shown in Figs. 1 to 3, the exhaust gas purification catalyst 1 includes an SiC base material 10 and a Pd catalyst layer 20.

### (1) SiC base material

The SiC base material 10 is a base material containing silicon carbide (SiC). For the SiC base material 10, base materials for known exhaust gas purification catalysts each of which contains, as a main component, silicon carbide (SiC) can be used without particular limitations. The SiC base material has electroconductivity and may function as a resistance heating element, and thus is suitable as a base material for electrically heated catalysts. The SiC base material 10 may further contain a component other than SiC to the extent that the component does not significantly inhibit the effects of the technology disclosed herein. For example, the "SiC base material" herein refers to a base material having a SiC content of 20 wt% or more (suitably 50 wt% or more, more suitably 70 wt% or more) relative to 100 wt% of the total weight of the base material. The component other than SiC, contained in the SiC base material, can be single Si. In the SiC base material 10 for electrically heated catalysts such as shown in the present embodiment, single Si may be added to the SiC base material for adjustment of electroconductivity.

As shown in Fig. 1, the outside shape of the SiC base material 10 in the present embodiment is cylindrical. The outside shape of the SiC base material 10 is not particularly limited, and may be elliptic cylindrical, polygonal, or the like. As shown in Figs. 1 and 2, the SiC base material 10 is a base material having a honeycomb structure. In other words, the SiC base material 10 includes multiple cells (gas flow paths) 12 and partitions 16 partitioning the cells 12. The shape of each of the cells is not particularly limited, and may be quadrilateral such as square, parallelogram, rectangle, and trapezoid; another polygon such as triangle, hexagon, and octagon; or circular.

As shown in Fig. 2, the SiC base material 10 in the present embodiment is a straight flow type base material. In other words, the SiC base material 10 includes multiple cells 12 and partitions 16 partitioning the cells 12. Each of the cells 12 includes a gas inlet 12a which is an opening into which exhaust gas flows and a gas outlet 12b which is an opening from which exhaust gas flows out. Exhaust gas which has introduced into the SiC base material 10 with such a configuration passes through the cells 12 of the SiC base material 10 and is distributed downstream while contacting the Pd catalyst layer 20 (see Fig. 3) formed on the surfaces of the partitions 16.

An exhaust gas purification catalyst 1 according to the present embodiment is used as an electrically heated catalyst. Specifically, in the present embodiment, an electrode 40 is attached to the outer peripheral surface of the SiC base material 10. For the electrode 40, an electrode including the known electrically heated catalyst can be used wihtout particular limitations. The electrode 40 can be, for example, a metal electrode or a carbon electrode. The electrode 40 includes an electrode layer 42 attached along the outer peripheral surface of the SiC base material 10 and an electrode terminal 44 which can be connected to a power source device (not shown). The current supplied from the power source device is diffused throughout the SiC base material 10 via the electrode terminal 44 and the electrode layer 42. Accordingly, the SiC base material 10, which is a resistance heating element, generates heat, thereby raising the temperature inside the base material to the active temperature of the noble metal catalyst even when the temperature of the exhaust gas is low.

### (2) Pd catalyst layer

As shown in Fig. 3, the Pd catalyst layer 20 is formed on each of the partitions 16 of the SiC base material 10. The Pd catalyst layer 20 is a layer containing at least palladium (Pd). Pd has excellent oxidation purification function for carbon monoxide (CO) and hydrocarbon (HC). Pd has high reactivity to single Si and SiC and a characteristic of being easily led to a member (typically the partition 16 of the SiC base material 10) in which single Si and SiC abundant a lot when exposed to high temperature environments. In contrast, in the exhaust gas purification catalyst disclosed herein, a Pd catalyst layer in which Pd is carried directly on an Si member containing Si or SiC is formed. Specifically, the "Si member" in the first embodiment is a partition 16 of the SiC base material 10. As mentioned above, the SiC base material 10 contains SiC as a main component and may further contain single Si and thus can be referred to as a "Si member containing Si or SiC." The Pd catalyst layer 20 in the first embodiment is formed by causing particulate Pd (Pd particles 22) to be carried on the partitions 16 of the SiC base material 10. This can reduce migration of the noble metal catalyst (Pd particles 22) in high temperature environments and reduce degradation of temperature characteristics. The effects of the exhaust gas purification catalyst 1 according to the present embodiment will be described below while comparing with the commonly used exhaust gas purification catalyst.

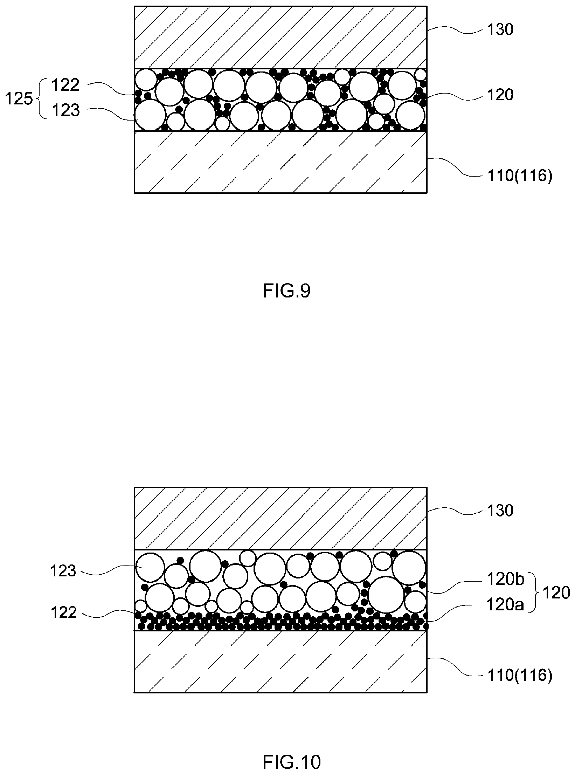

Fig. 9 is a schematic sectional view of the layer structure in a partition of the SiC base material of the commonly used exhaust gas purification catalyst. Fig. 10 is a schematic sectional view of the state of the exhaust gas purification catalyst shown in Fig. 9 after being exposed to a high temperature environment. In the exhaust gas purification catalyst shown in Fig. 9, a Pd catalyst layer 120 is formed on the surface of the partition 116 of the SiC base material 110. The reference sign 130 in Fig. 9 is a second catalyst layer 130 containing a noble metal catalyst (such as Pt and Rh) other than Pd. A commonly used Pd catalyst layer 120 shown in Fig. 9 contains a catalyst material 125 in which Pd particles 122 are carried on a metal oxide carrier 123 such as alumina particles. When an exhaust gas purification catalyst with such a configuration is exposed to high temperature environments, Pd particles 122 carried on the metal oxide carrier 123 migrate toward the partition 116 of the SiC base material 110, and a Pd aggregated region 120a in which the Pd particles 122 are aggregated in a lower portion of the Pd catalyst layer 120 (a region in contact with the partition 116) is formed (see Fig. 10). On the other hand, a catalyst disappeared region 120b in which almost no Pd particles 122 remain is generated in an upper portion of the Pd catalyst layer 120 (a region opposite to the partition 116). Such migration of Pd particles 122 accelerates aggregation of Pd particles 122 due to contact between the Pd particles 122 during migration, which may degrade catalytic capacity (typically, temperature characteristics) of the Pd catalyst layer 120.

The Pd catalyst layer 20 in the present embodiment is, as mentioned above, formed by causing Pd particles 22 to be carried directly on the partitions 16 of the SiC base material 10. In other words, in the present embodiment, the Si member (the partitions 16 of the SiC base material) and the Pd particles 22 are in contact in advance, thereby reducing the migration of the Pd particles 22 in high temperature environments. According to the present embodiment, aggregation of Pd particles 22 due to the migration is reduced, so that degradation of temperature characteristics can be appropriately reduced.

The thickness and the length of the Pd catalyst layer 20 do not limit the technology disclosed herein and can be adjusted if necessary. For example, the Pd catalyst layer 20 in the present embodiment may be a thin film-like layer formed along the surface of the partition 16 of the SiC base material 10. The thickness of the Pd catalyst layer 20 is adjusted preferably in consideration of dimensions of the SiC base material 10, the flow rate of exhaust gas, and the like. For example, the thickness of the Pd catalyst layer 20 may be from 0.5 nm to 500 nm inclusive, from 1 nm to 100 nm inclusive, from 1.5 nm to 50 nm inclusive, or from 2 nm to 15 nm inclusive. The length of the Pd catalyst layer 20 in the direction in which the partition 16 extends is also not particularly limited. For example, the Pd catalyst layer 20 may be formed over the overall length (100%) of the partition 16. Further, the length of the Pd catalyst layer 20 may be 90% or less, 80% or less, or 70% or less of the overall length of the partition 16. The lower limit of the length of the Pd catalyst layer 20 may be 20% or more, 30% or more, 40% or more, 50% or more, or 60% or more of the overall length of the partition 16.

The size of Pd particles 22 is also not particularly limited. The mean particle diameter of the Pd particles 22 is preferably 400 nm or less, more preferably 100 nm or less, yet more preferably 50 nm or less, particularly preferably 10 nm or less. Formation of such small Pd particles 22 increases the surface areas of exhaust gas and Pd and improves exhaust gas purification performance. The lower limit of the mean particle diameter of the Pd particles 22 is preferably 0.5 nm or more, more preferably 0.7 nm or more, yet more preferably 1.5 nm or more, particularly preferably 2 nm or more. Formation of such Pd particles 22 with a certain size or more allows substantial prevention of particle coarsening due to sintering. The mean particle diameter of the Pd particles can be determined as an average value of particle diameters of 100 Pd particles observed by an electron microscope (e.g., scanning electron microscope (SEM) and transmission electron microscope (TEM)).

The Pd catalyst layer 20 may contain another noble metal catalyst than Pd. Examples of the other noble metal catalyst include platinum (Pt), rhodium (Rh), ruthenium (Ru), osmium (Os), and iridium (Ir). As described in detail below, in the exhaust gas purification catalyst having a catalyst layer containing Pd and the other noble metal catalyst, Pd is led to the partition of the SiC base material. According to the technology disclosed herein, such migration of Pd in the mixed catalyst layer can be appropriately reduced.

In addition, the Pd catalyst layer 20 in the present embodiment preferably contains substantially no metal oxide carrier. This more suitably reduce migration of the Pd particles 22 and ensures reduction of degradation of temperature characteristics. "Containing substantially no metal oxide carrier" herein indicates that the metal oxide carrier is not intentionally added to the Pd catalyst layer. Therefore, a case where a trace amount of a material that can be regarded as a metal oxide carrier is unavoidably contained due to raw material, production processes, and the like is encompassed in the concept of "containing substantially no metal oxide carrier." For example, a case where in analysis of the Pd catalyst layer based on elemental mapping by FE-EPMA, the abundance of elements which are regarded as a metal oxide carrier is 1% or less (preferably 0.5% or less, more preferably 0.1% or less, yet more preferably 0.05% or less, particularly preferably 0.01% or less) can be said that "containing substantially no metal oxide carrier." Examples of the metal oxide carrier include metal oxide particles including aluminum oxide, silicon oxide, magnesium oxide, titanium oxide, cerium oxide, zirconium oxide, calcium oxide, strontium oxide, barium oxide, praseodymium oxide, lanthanum oxide, niobium oxide, yttrium oxide, and the like.

### (3) Second catalyst layer

In the exhaust gas purification catalyst 1 according to the present embodiment, a second catalyst layer 30 is formed on the upper side (the cell side) of the Pd catalyst layer 20. Although detailed illustrations are omitted in Fig. 3, the second catalyst layer 30 contains a catalyst material containing a noble metal catalyst other the Pd and a carrier carrying the noble metal catalyst. Examples of the noble metal catalyst other than Pd include platinum (Pt), rhodium (Rh), ruthenium (Ru), osmium (Os), and iridium (Ir). In particular, Rh has excellent reduction purifying performance and can suitably purify NOx which is difficult to be purified by the Pd catalyst layer 20, thereby contributing to improvement of purifying performance of the entire exhaust gas purification catalyst 1. The second catalyst layer 30 may further contain an additive other than the noble metal catalyst and the carrier. This kind of additive can be, for example, an OSC material having oxygen storage capacity.

The second catalyst layer 30 may contain a metal oxide carrier as the carrier. In the second catalyst layer 30, a metal oxide carrier including aluminum oxide, silicon oxide, magnesium oxide, titanium oxide, cerium oxide, zirconium oxide, calcium oxide, strontium oxide, barium oxide, praseodymium oxide, lanthanum oxide, niobium oxide, yttrium oxide, or the like is used without particular limitations. In this case, the second catalyst layer 30 is preferably a catalyst layer containing substantially no Pd. This allows reduction in migration of Pd in the second catalyst layer 30. "Containing substantially no Pd" herein indicates that Pd is not intentionally added to the second catalyst layer. Thus, a case where a trace amount of Pd element is unavoidably contained in the second catalyst layer due to raw materials, production processes (including diffusion from the Pd catalyst layer), and the like is regarded as the concept of "containing substantially no Pd." For example, a case where in elemental mapping by FE-EPMA, the abundance of Pd element in the second catalyst layer is 1% or less (preferably 0.5% or less, more preferably 0.1% or less, yet more preferably 0.05% or less, particularly preferably 0.01% or less) can be said that "a second catalyst layer containing substantially no Pd is formed."

The thickness and the length of the second catalyst layer 30 do not limit the technology disclosed herein and can be adjusted if necessary. For example, the thickness of the second catalyst layer 30 may be from 1 µm to 500 µm inclusive, or from 10 µm to 200 µm inclusive. In addition, the length of the second catalyst layer 30 in the direction in which the partition 16 extends is also not particularly limited. For example, the second catalyst layer 30 may be formed over the overall length (100%) of the partition 16. Further, the length of the second catalyst layer 30 may be 90% or less, 80% or less, or 70% or less of the overall length of the partition 16. The lower limit of the length of the second catalyst layer 30 may be 20% or more, 30% or more, 40% or more, 50% or more, or 60% or more of the overall length of the partition 16.

### 2. Method for producing exhaust gas purification catalyst

Next, the method for manufacturing the exhaust gas purifying catalyst 1 of the above configuration will be described. The production method according to the present embodiment includes base material preparation and catalyst layer formation. Each process will be described below.

### (1) Base material preparation

In this process, a SiC base material 10 including partitions 16 partitioning multiple cells 12 and containing SiC is prepared. The detailed structure and materials of the SiC base material 10 have already been described and are thus omitted. The term "preparation" herein is a concept encompassing not only producing the SiC base material 10 by various molding methods, but also obtaining the SiC base material 10 by purchasing or transferring.

### (2) Catalyst layer formation

In this process, a Pd catalyst layer 20 containing at least Pd is formed on the surface of each partition 16 of the SiC base material 10. As mentioned above, in the Pd catalyst layer 20 according to the present embodiment, Pd particles 22 are carried directly on the partition 16 (Si member) of the SiC base material 10. Such a Pd catalyst layer 20 can be formed easily by solution preparation, solution application, and firing.

### (a) Solution preparation

In this process, a Pd solution containing Pd element is prepared. The Pd solution is a precursor of Pd particles 22 and causes the Pd particles 22 to be deposited in the firing described below. The Pd solution is not particularly limited as long as containing Pd element, and known solutions which can be used for formation of the catalyst layer containing Pd can be used without particular limitations. The Pd solution can be, for example, a solution obtained by dissolving a palladium salt in an aqueous medium. Examples of the palladium salt include palladium nitrate, palladium sulfate, palladium chloride, and palladium acetate. The content of the Pd element in the Pd solution can be adjusted as appropriate according to the composition of the intended Pd catalyst layer 20. For example, the Pd equivalent in the Pd solution is preferably 0.05 wt% or more, more preferably 0.1 wt% or more, particularly preferably 0.2 wt% or more. The upper limit of the Pd equivalent in the Pd solution is preferably 5 wt% or less, more preferably 3 wt% or less, particularly preferably 2 wt% or less.

As mentioned above, the Pd catalyst layer 20 in the present embodiment preferably contains substantially no metal oxide carrier. In other words, in the Pd solution, a metal oxide carrier including aluminum oxide, silicon oxide, magnesium oxide, titanium oxide, cerium oxide, zirconium oxide, calcium oxide, strontium oxide, barium oxide, praseodymium oxide, lanthanum oxide, niobium oxide, yttrium oxide, or the like is used without particular limitations. More specifically, the content of the metal oxide particles in the Pd solution is preferably 0.1 wt% or less, more preferably 0.05 wt% or less, yet more preferably 0.01 wt% or less, particularly preferably 0 wt%.

The Pd solution preferably contains an organic thickener. Examples of the thickener include aqueous resin materials such as hydroxylethyl cellulose, carboxymethyl cellulose, methyl cellulose, polyvinyl alcohol, ethylene glycol, propylene glycol, pectin, and xanthan gum. These thickeners added can adjust the viscosity of the Pd solution to appropriately apply the Pd solution to the partition 16 of the SiC base material 10. The organic thickener is burnt out by the firing and thus has an advantage of being difficult to degrade the effects of the technology disclosed herein. The viscosity of the Pd solution is preferably set in consideration of the structure (the cell diameter, the length, and the like) of the SiC base material 10 as appropriate. For example, the viscosity of the Pd solution is suitably about 10 mPa to about 1000 mPa, preferably about 100 mPa to about 800 mPa. The viscosity herein is a value obtained using a commercially available cone-plate viscometer when the number of rotations is 1 rpm to 100 rpm, the temperature is 25°C, and the shear velocity is 380 s⁻¹.

### (b) Solution application

In this process, the Pd solution is applied to the surface of the partition 16 of the SiC base material 10. A specific procedure in this process include, for example, introducing the Pd solution into cells 12 from a gas outlet 12b and sucking the cells 12 from a gas outlet 12b. This procedure allows appropriate adhesion of the Pd solution to the surface of the partition 16. This process only needs to apply the Pd solution to the surface of the partition 16, and is not limited to the sucking mentioned above. For example, pressure feeding of supplying compressed air from the gas inlet 12a may be employed after the Pd solution is introduced into the cells from the gas inlet 12a.

In this process, a drying process may be performed after the Pd solution is adhered to the surface of the partition 16. This process allows suitable adhesion of active ingredients (typically, the Pd element) in the Pd solution to the surface of the partition 16. The heating temperature in the drying process is preferably 50°C to 200°C, more preferably 100°C to 150°C. The drying time is preferably 0.5 hours to 5 hours, preferably 1 hour to 3 hours.

### (c) Firing

Next, in production of the exhaust gas purification catalyst 1, the SiC base material 10 into which the Pd solution has been supplied is fired. At this time, in the present embodiment, the Pd solution is applied directly to the surface of the partition 16. Thus, a Pd catalyst layer 20 in which Pd particles 22 are carried directly on the surface of the partition 16 is formed. In the Pd catalyst layer 20, the partitions 16 of the SiC base material 10 containing SiC or single Si and the Pd particles 22 are in contact in advance. This allows appropriate reduction in aggregation of the Pd particles 22 due to the migration.

The firing conditions in this process are not particularly limited, and can be controlled, as appropriate, according to the structure of the SiC base material 10 and the composition of the Pd solution. For example, the firing temperature may be 300°C or more, 350°C or more, 400°C or more, or 450°C or more. The upper limit of the firing temperature may be 1000°C or less, 900°C or less, 800°C or less, 700°C or less, or 600°C or less. The firing time may be 0.5 hours or more, 1 hour or more, or 1.5 hours or more. The upper limit of the firing time may be 8 hours or less, 6 hours or less, or 4 hours or less.

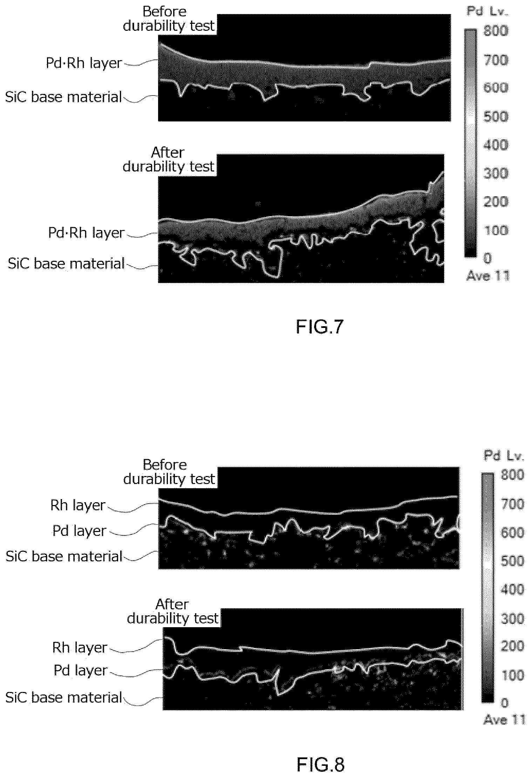

In the production method according to the present embodiment, the Pd solution containing substantially no solid content (such as metal oxide particles) is used to form the Pd catalyst layer 20. The Pd solution is easily introduced into fine pores in the partitions 16, and thus, the Pd particles 22 may be formed in the partitions 16 of the SiC base material 10 after firing (see Figs. 3 and 8). Although not intended to limit the technology disclosed herein, in the production method according to the present embodiment, the abundance of Pd inside the partitions 16 may be 10% or more (typically 20% or more, for example, 30% or more). The "abundance of Pd inside the partitions" herein is a proportion (%) of Pd element determined inside the partitions relative to the total number (100%) of Pd elements determined by the elemental mapping in FE-EPMA.

### (3) Second catalyst layer formation

In the exhaust gas purification catalyst 1 according to the present embodiment, a second catalyst layer 30 is formed on the Pd catalyst layer 20. The second catalyst layer 30 may be formed by known methods without particular limitations. For example, the second catalyst layer formation may include: preparing a second layer slurry in which a metal oxide carrier is dispersed in a solution (noble metal element solution) containing a noble metal element; and applying the second layer slurry to the upper surface of the Pd catalyst layer 20; and firing the second layer slurry adhered to the upper surface of the Pd catalyst layer 20. By performing these processes, the second catalyst layer 30 can be formed on the upper side of the Pd catalyst layer 20. The second layer slurry only needs to contain a precursor of the second catalyst layer 30, and specific components thereof are not limited.

In the production method according to the present embodiment, the Pd catalyst layer 20 and the second catalyst layer 30 are formed separately. However, this procedure does not limit the technology disclosed herein, and the Pd catalyst layer 20 and the second catalyst layer 30 may be formed in parallel. Specifically, the Pd solution is applied to the surface of the partition 16 and is then dried, and the second catalyst layer 30 is applied to the dried Pd solution and fired in parallel. Thus, the Pd catalyst layer 20 and the second catalyst layer 30 are formed in parallel. However, considering the point of substantially preventing mixing of part of the metal oxide carrier contained in the second catalyst layer 30 into the Pd catalyst layer 20, the Pd catalyst layer 20 and the second catalyst layer 30 are preferably formed separately.

### [Second Embodiment]

The first embodiment of the technology disclosed herein has been described above. The technology disclosed herein is not limited to the first embodiment, and various forms can be employed. The following describes the second embodiment of the technology disclosed herein. Fig. 4 is schematic sectional view of a layer structure in a partition of an SiC base material of an exhaust gas purification catalyst according to the second embodiment.

As mentioned above, the "Si member" in the first embodiment is a partition 16 of the SiC base material 10, and Pd particles 22 are carried directly on the partition 16 (see Fig. 3). However, the "Si member" in the technology disclosed herein only needs to be a member containing single Si or SiC, and is not limited to the partition of the SiC base material. For example, the "Si member" may be carrier particles (Si-containing particles 24) containing single Si or SiC (see Fig. 4). In other words, in the second embodiment, a Pd catalyst layer 20 is formed of a Pd-Si catalyst material 26 in which Pd particles 22 are carried on Si-containing particles 24. Even when such a configuration is employed, the Si member (Si-containing particles 24) and the Pd particles 22 are in contact in advance, thereby reducing aggregation of the Pd particles 22 due to the migration and reducing degradation of temperature characteristics.

In the case where the Pd catalyst layer 20 containing the Pd-Si catalyst material 26 is formed such as in the present embodiment, a Pd-Si slurry in which Si-containing particles are dispersed in the Pd solution is preferably used. The Pd-Si slurry is applied to the surface of the partition 16 and is then fired, thereby easily forming the Pd catalyst layer 20 in which Pd particles 22 are carried on the Si-containing particles 24. The "Si-containing particles" used in the present embodiment have a concept encompassing Si particles and SiC particles. Either particles can be used to appropriately reduce migration of the Pd particles 22 in high temperature environments. For formation of the Pd catalyst layer 20 in the present embodiment, a powder material in which Si particles and SiC particles are mixed can also be used. The total content of the Si particles and the SiC particles relative to 100 wt% of the total weight of the power material containing the Si-containing particles is preferably 10 wt% or more, more preferably 50 wt% or more, particularly preferably 70 wt% or more.

The composition of the Pd-Si slurry is not particularly limited, and can be controlled, as appropriate, according to the composition of the intended Pd catalyst layer 20. For example, the content of the Pd element in the Pd-Si slurry can be set to the same as the content of the Pd element in the Pd-Si slurry in the first embodiment. The amount of the Si-containing particles dispersed is preferably controlled considering the relationship with the content of the Pd element. For example, the mass ratio (Pd/Si) of the Pd element to the Si-containing particles in the Pd-Si slurry is preferably 0.1 wt% or more, more preferably 0.5 wt% or more, particularly preferably 1 wt% or more. This ensures the amount of the Si-containing particles 24 to the extent that they can appropriately carry Pd particles 22. The Pd/Si is preferably 14 wt% or less, more preferably 12 wt% or less, yet more preferably 10 wt% or less, particularly preferably 8 wt% or less. This allows formation of the Pd catalyst layer 20 containing a sufficient amount of Pd particles 22.

The Pd-Si slurry may contain an additive other than the Si-containing particles and the Pd element. Examples of such an additive include an OSC material, a metal oxide material, and a binder. Examples of the OSC material include a composite oxide (CZ composite oxide) containing cerium oxide and zirconium oxide. Examples of the other metal oxide material include aluminium oxide, silicon oxide, magnesium oxide, titanium oxide, cerium oxide, zirconium oxide, calcium oxide, strontium oxide, barium oxide, praseodymium oxide, lanthanum oxide, niobium oxide, and yttrium oxide. Examples of the binder include inorganic binders such as aluminum sol, titania sol, and zirconia sol. The additive other than the Si-containing particles and the Pd element is not particularly limited as long as the effects of the technology disclosed herein are not significantly impaired. The additive used for formation of the catalyst layer in the commonly used exhaust gas purification catalyst can be used as appropriate.

### [Other Embodiments]

The embodiments of the technology disclosed herein have been described above. Note that the technology disclosed herein is not limited to the embodiments described above. For example, in the embodiments, a second catalyst layer 30 containing a noble metal catalyst other than Pd is formed on the upper side of the Pd catalyst layer 20. However, the second catalyst layer 30 does not affect the effects of the technology disclosed herein, and can be omitted if necessary. In other words, even in the exhaust gas purification catalyst including no second catalyst layer formed, if Pd particles 22 are carried directly on the Si member (such as an SiC base material 10 and Si-containing particles 24), migration of Pd can be suitably reduced. Further, a third catalyst layer containing a different noble metal catalyst may further be formed on the second catalyst layer.

In the embodiments, a straight flow type SiC base material 10 is used. However, the structure of the SiC base material is not particularly limited, and structures other than the straight flow type may also be employed. The SiC base material having another structure can be, for example, a wall flow type SiC base material. The wall-flow type base material includes: inlet cells each with an opening at an exhaust gas inlet end; outlet cells each with an opening at an exhaust gas outlet end, and porous partitions partitioning both cells. In the exhaust gas purification catalyst using the wall-flow type SiC base material, exhaust gas flowing into the inlet cells passes through the porous partitions while contacting the Pd catalyst layer, and then exhausted outside the outlet cells. Even when this kind of wall-flow type base material is used, the effects of the technology disclosed herein can be appropriately exhibited.

The embodiments have been described with reference to an example in which an exhaust gas purification catalyst is used as an electrically heated catalyst. However, the technology disclosed herein is not limited to the electrically heated catalyst, and can be applied to all exhaust gas purification catalysts using the SiC base material without limitations. For example, a diesel particulate filter (DPF) is heated at high temperatures during regeneration process, so that an SiC base material in which it is difficult to cause cracking due to thermal cycling may be used. Further, the SiC base material for DPF may contain 10 wt% to 30 wt% (for example, about 20 wt%) single Si. The technology disclosed herein is not limited to applications, and can appropriately reduce migration of Pd in all SiC base materials containing SiC or single Si.

### [Test Examples]

The following describes Examples of the technology disclosed herein. The following description is not intended to limit the technology disclosed herein to the Examples.

### <Production of exhaust gas purification catalyst>

### (Comparative Example 1)

In this example, first, a straight flow type SiC base material (volumetric capacity: 551 mL, the number of cells: 600 cpsi, thickness of partition: 5 mil, cell shape: hexagonal, diameter: 118.4 mm, base material length: 50 mm) was prepared. Then, 20 wt% alumina carrier, 13 wt% Cz composite oxide material, and 0.7 wt% Al₂O₃-based binder were dispersed in a palladium nitrate solution (Pd equivalent: 0.6 wt%), thereby preparing a Pd-Al₂O₃ slurry. Thereafter, the Pd-Al₂O₃ slurry was introduced into cells of the base material from gas inlets, and gas outlets were sucked by a blower. Thus, the slurry was adhered to each partition. Then, the Pd-Al₂O₃ slurry was subjected to a drying process at 120°C for two hours and then a firing process at 500°C for two hours. Thus, a Pd-Al₂O₃ layer was formed on the surface of the partition.

Next, 16 wt% alumina powder, 9.2 wt% CZ composite oxide material, and 0.15 wt% Al₂O₃-based binder were dispersed in a rhodium nitride solution (Rh equivalent: 0.03 wt%), thereby preparing a Rh-Al₂O₃ slurry. The CZ composite oxide material is a composite material containing CeO₂ and ZrO₂ as main components and trace amounts of Pr₂O₃, Nd₂O₃, La₂O₃, and Y₂O₃. Then, the Rh-Al₂O₃ slurry was introduced into the cells of the base material from the gas inlets, and gas outlets were sucked by the blower to apply the slurry to the Pd-Al₂O₃ layer. Thereafter, the Rh-Al₂O₃ slurry was subjected to the drying process at 120°C for two hours and then the firing process at 500°C for two hours. Thus, an exhaust gas purification catalyst in which the Rh-Al₂O₃ layer was formed on the Pd-Al₂O₃ layer was produced. In the exhaust gas purification catalyst, the amount of Pd used was 2 g/L, and the amount of Rh used was 0.15 g/L. The Pd-Al₂O₃ layer and the Rh-Al₂O₃ layer were formed over the entire length of the partition of the SiC base material, and the total coating amount of these catalyst layers was 228.8 g/L.

### (Comparative Example 2)

In this example, the Rh-Al₂O₃ slurry was applied to the surface of each partition to form an Rh-Al₂O₃ layer, and then the Pd-Al₂O₃ slurry was applied to the Rh-Al₂O₃ layer to form a Pd-Al₂O₃ layer. Thus, in Comparative Example 2, an exhaust gas purification catalyst in which the Pd-Al₂O₃ layer was formed on the Rh-Al₂O₃ layer was produced. Conditions for forming the exhaust gas purification catalyst of Comparative Example 2 were the same as those of Comparative Example 1 except that the order of forming the Rh-Al₂O₃ layer and the Pd-Al₂O₃ layer is different.

### (Comparative Example 3)

In this example, first, the Rh-Al₂O₃ slurry was applied to the surface of each partition in the same manner as in Comparative Example 2, thereby forming an Rh-Al₂O₃ layer. Then, a thickener (hydroxyethyl cellulose) was added to a palladium nitrate solution (Pd equivalent: 0.5 wt%), thereby preparing a Pd solution. Thereafter, the Pd solution was introduced into cells of the base material from gas inlets, and gas outlets were sucked by a blower. Thus, the Pd solution was applied to the Rh-Al₂O₃ layer. Then, the Rh-Al₂O₃ slurry was subjected to a drying process at 120°C for two hours and then a firing process at 500°C for two hours. Thus, an exhaust gas purification catalyst of Comparative Example 3 was produced. In the produced exhaust gas purification catalyst, a single catalyst layer containing Rh and Pd (Pd·Rh-Al₂O₃ layer) was formed (see Fig. 7). This is presumed due to penetration of the Pd solution into the Rh-Al₂O₃ layer.

### (Example 1)

In this example, first, a Pd solution was applied to the surface of each partition to form a Pd catalyst layer, and then, a Rh-Al₂O₃ slurry was applied to the Pd layer to form an Rh-Al₂O₃ layer. In other words, in Example 1, Pd particles were carried directly on the partition of SiC base material to form a Pd catalyst layer, and on the Pd catalyst layer, an Rh-Al₂O₃ layer was formed. The Pd solution and the Rh-containing slurry used in Example 1 were the same as those of Comparative Example 3.

### <Evaluation Test>

### (High temperature durability test)

The exhaust gas purification catalyst of each of Example 1 and Comparative Examples 1 to 3 was attached to an exhaust system of a V8 gasoline engine placed on a table, which was then subjected to a durability test at a catalyst bed temperature of 1000°C for 50 hours under conditions including a predetermined fuel cut.

### (Evaluation of Pd mobility)

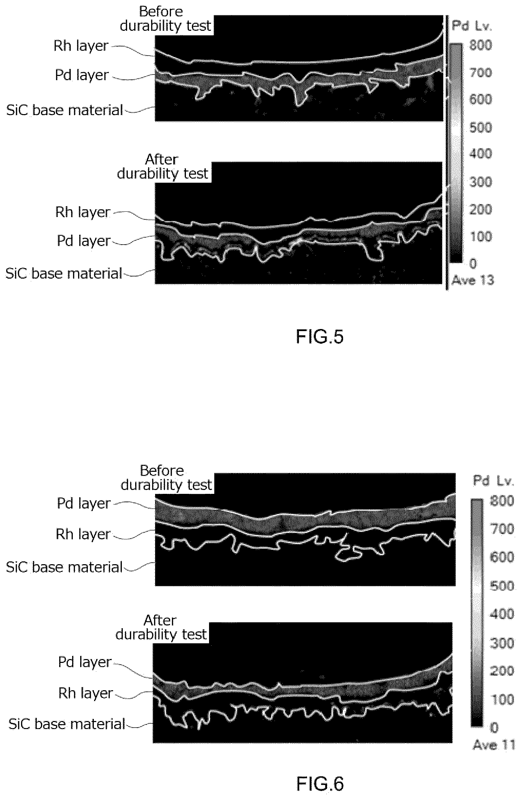

The exhaust gas purification catalysts of Example 1 and Comparative Examples 1 to 3 before and after the durability test were cut into a predetermined size, then embedded in resin, and polished in cross section. Each cross section was vapor deposited, and analyzed using FE-EPMA "JXA-8530F" (JEOL). Pd mapping images before and after the durability test in each of Example 1 and Comparative Examples 1 to 3 are shown in Figs. 5 to 8.

Then, the proportion of Pd migrated on the surface of the base material (Pd migration proportion) was calculated based on each of the Pd mapping images obtained by FE-EPMA. The Pd migration proportion is calculated as follows. First, the outermost surface of the partition in the EPMA image was set as position 0, the topmost surface of the coat layer (the Pd layer and the Rh layer) formed on the partition is set as position X, and a position 2.5 µm from the position 0 toward the position X was set as position Y The intensity distribution of the Pd element on a 0-X line from the position 0 to the position X was measured, and the integrated value a of the intensity of the Pd element was calculated. The intensity of the Pd element on the 0-X line was then corrected to convert the integrated value a to 100. Thereafter, the intensity distribution of the Pd element on a 0-Y line from position 0 to the position Y was measured, and the integrated value b of the intensity of the Pd element was calculated. In this test example, a value "(the integrated value b after the durability test)-(the integrated value b of the sample before the durability test)" was regarded as the Pd migration proportion (%). Results of the calculations are shown in Table 1.

### (Evaluation of temperature characteristics)

The exhaust gas purification catalyst was installed in an exhaust system of an engine bench to control a combustion state of engine at the theoretical air-to-fuel ratio. The temperature of inflow gas into the catalyst was increased from 200°C to 500°C at a temperature rising rate of 10 °C/min using a heat exchanger. The inflow air volume of the engine was set to 25 g/sec. Gas components of the inflow gas into the catalyst and the outflow gas from the catalyst during temperature rising were analyzed, and the temperature (T50-THC) at which 50% of the total hydrocarbon (THC) could be purified was calculated to evaluate temperature characteristics. Table 1 shows the measurement results.

**[Table 1]**

| | Catalyst layer production conditions | | Catalyst layer after firing | | Pd migration proportion (%) | T50-THC (°C) |
|---|---|---|---|---|---|---|
| | First time | Second time | Lower layer | Upper layer | | |
| Comp. Ex. 1 | Pd-Al₂O₃ slurry | Rh-Al₂O₃ slurry | Pd-Al₂O₃ layer | Rh-Al₂O₃ layer | 25.0 | 365.9 |
| Comp. Ex. 2 | Rh-Al₂O₃ slurry | Pd-Al₂O₃ slurry | Rh-Al₂O₃ layer | Pd-Al₂O₃ layer | 12.3 | 393.3 |
| Comp. Ex. 3 | Rh-Al₂O₃ Slurry | Pd solution | Pd·Rh-Al₂O₃ layer | | 13.8 | 392.8 |
| Ex. 1 | Pd solution | Rh-Al₂O₃ slurry | Pd layer | Rh-Al₂O₃ layer | 0.2 | 354.2 |

### <Evaluation results>

As illustrated in Figs. 5 to 7, in all of Comparative Examples 1 to 3, a catalyst disappeared region was generated after the durability test, and migration of Pd from the Pd-Al₂O₃ layer (or (Pd·Rh-Al₂O₃ layer) toward the SiC base material was confirmed. As shown in Table 1, in Comparative Examples 1 to 3, the Pd migration proportion was 12% or more. In contrast, in Example 1, a very thin Pd layer (Pd film) along the auxiliary line indicating the surface of the partition of the SiC base material in Fig. 8 was observed, and part of the Pd was penetrated inside the partition of the SiC base material. Then, as shown in Fig. 8 and Table 1, in Example 1, no significant change in distribution of Pd (the Pd film on the surface of the partition and Pd penetrated inside the partition) was not observed after the durability test. This demonstrates that contacting between the Si member containing single Si or SiC (here, the partition of the SiC base material) and Pd in advance allows reduction in migration of Pd. Further, as shown in Table 1, in Comparative Examples 1 to 3 in which the migration of Pd was observed, a reduction in temperature characteristics (higher T50-THC) was confirmed. This is presumed due to a reduction in catalytic activity due to aggregation and coarsening of Pd particles by the migration in high temperature environments. In contrast, in Example 1 in which the migration of the Pd element was reduced, suitable temperature characteristics could be maintained even after the durability test.

Although specific examples of the present disclosure have been described in detail above, they are mere examples and do not limit the appended claims. The technology described in the appended claims include various modifications and changes of the foregoing specific examples.

### Industrial applicability

The present invention provides a technology of reducing migration of a noble metal catalyst in high temperature environments and reducing degradation of temperature characteristics. This allows improvement in purifying performance of the exhaust gas purification catalyst using the SiC base material.

## Claims

1. A method for producing an exhaust gas purification catalyst,
the method comprising:
preparing a SiC base material which has partitions partitioning multiple cells and contains SiC; and
forming a Pd catalyst layer containing at least Pd on surfaces of the partitions of the SiC base material, wherein
in the forming of the catalyst layer, the Pd catalyst layer is formed by causing the Pd to be carried directly on an Si member containing Si or SiC.

2. The method according to claim 1, wherein
in the forming of the catalyst layer, a Pd catalyst layer containing substantially no metal oxide carrier is formed.

3. The method according to claim 2, wherein
the metal oxide carrier is metal oxide particles including at least one selected from the group consisting of aluminum oxide, silicon oxide, magnesium oxide, titanium oxide, cerium oxide, zirconium oxide, calcium oxide, strontium oxide, barium oxide, praseodymium oxide, lanthanum oxide, niobium oxide, and yttrium oxide.

4. The method according to any one of claims 1 to 3, wherein
the forming of the catalyst layer includes:
preparing a Pd solution containing the Pd;
applying the Pd solution to the surfaces of the partitions of the SiC base material; and
firing the Pd solution adhered to the surfaces of the partitions.

5. The method according to any one of claims 1 to 3, wherein
the forming of the catalyst layer includes:
preparing a Pd-Si slurry in which Si-containing particles containing Si or SiC is dispersed in the Pd solution containing the Pd;
applying the Pd-Si slurry to the surfaces of the partitions of the SiC base material; and
firing the Pd-Si slurry adhered to the surfaces of the partitions.

6. An exhaust gas purification catalyst comprising:
an SiC base material which has partitions partitioning multiple cells and contains SiC; and
a Pd catalyst layer formed on the surfaces of the partitions of the SiC base material and containing at least Pd, wherein
in the Pd catalyst layer, the Pd is carried directly on an Si member containing Si or SiC.

7. The exhaust gas purification catalyst according to claim 6, wherein the Pd catalyst layer contains substantially no metal oxide carrier.

8. The exhaust gas purification catalyst according to claim 7, wherein
the metal oxide carrier is metal oxide particles including at least one selected from the group consisting of aluminum oxide, silicon oxide, magnesium oxide, titanium oxide, cerium oxide, zirconium oxide, calcium oxide, strontium oxide, barium oxide, praseodymium oxide, lanthanum oxide, niobium oxide, and yttrium oxide.

9. The exhaust gas purification catalyst according to any one of claims 6 to 8, wherein
the Si member is the partitions of the SiC base material, and the Pd is carried on the partitions of the SiC base material.

10. The exhaust gas purification catalyst according to any one of claims 6 to 8, wherein
the Si member is Si-containing particles containing Si or SiC, and the Pd is carried on the Si-containing particles.
